(19) Europäisches Patentamt
European Patent Office
Office européen des brevets

(11) **EP 1 738 820 B1**

(12) **EUROPEAN PATENT SPECIFICATION**

(45) Date of publication and mention
of the grant of the patent:
**11.11.2009 Bulletin 2009/46**

(51) Int Cl.:
*B01J 19/00* (2006.01)  *G01N 37/00* (2006.01)
*G01N 1/00* (2006.01)  *G01N 1/10* (2006.01)

(21) Application number: **05719235.3**

(22) Date of filing: **17.02.2005**

(86) International application number:
**PCT/JP2005/002433**

(87) International publication number:
**WO 2005/084792 (15.09.2005 Gazette 2005/37)**

(54) **Micro-fluidic unit having a hollow filament channel**

Mikrofluidische Einheit mit Hohlfaser-Kanal

Unité micro fluidique munie d'un canal sous forme de filament creux

(84) Designated Contracting States:
**AT BE BG CH CY CZ DE DK EE ES FI FR GB GR HU IE IS IT LI LT LU MC NL PL PT RO SE SI SK TR**

(30) Priority: **18.02.2004 JP 2004041379**
**28.04.2004 JP 2004133265**
**29.11.2004 JP 2004343821**

(43) Date of publication of application:
**03.01.2007 Bulletin 2007/01**

(73) Proprietor: **Hitachi Chemical Co., Ltd.**
**Shinjuku-ku,**
**Tokyo 163-0449 (JP)**

(72) Inventors:
• **KAWAZOE, Hiroshi,c/o Hitachi Chem. Co., Ltd.**
**Ibaraki 308-8521 (JP)**
• **YASUE, Kiyoshi, c/o Chemical Co., Ltd.**
**Tokyo 163-0449 (JP)**
• **AKAI, Kunihiko, c/o Hitachi Chemical co., Ltd.**
**Ibaraki 308-8521 (JP)**
• **INOUE, Yoshinori**
**Tokyo 181-0013 (JP)**

(74) Representative: **HOFFMANN EITLE**
**Patent- und Rechtsanwälte**
**Arabellastrasse 4**
**81925 München (DE)**

(56) References cited:
EP-A- 1 486 455  DE-A1- 4 308 697
FR-A- 2 813 073  JP-A- 2000 015 065
US-A- 4 959 152  US-A- 5 070 606

## Description

Technical Field

The present invention relates to a supporting unit for microfluid-system.

Background Art

Studies on reduction in size of reaction system and analyzer by using the MEMS (Micro Electro Mechanical System) technology are now in progress in the fields of chemistry and biochemistry. Monofunctional mechanical elements (micromachines) such as micorpump and microvalve, components of such a system, have been under research and development (see, for example, Nonpatent Documents 1 and 2).

Various parts such as micromachines should be systemized in multiples for a desirable chemical reaction or chemical analysis. Such systems finally obtained are generally called, for example, microreactor systems or micro-total analysis system (μTAS). The micromachine is generally formed on a silicon chip, by applying the semiconductor-manufacturing process. It is possible in principle to form (integrate) multiple elements on a chip for systematization, and such studies are also in progress (for example, Nonpatent Document 3). However, the production process is complicated, and it would still be difficult to produce such a system in commercial scale.

A chip-shaped substrate (nanoreactor) having channels formed by engraving grooves at particular positions on a silicon substrate for example by etching was proposed as a method of forming a fluid circuit (system) by connecting multiple micromachines and others to each other. The method has an advantage that the production thereby is much easier than that by the integration method above. However currently, the sectional area of the channel is small, leading to increase in the interfacial resistance between the fluid and the wall of channel; the channel length is at most of the mm order; and it is difficult to increase the number of channel layers; and thus, there still exists a problem that the possible kind, number of the steps and capacity of the reaction and analysis are restricted in practically performing synthetic reaction and chemical analysis.

Nonpatent Document 1: Shoji, "Chemical Industry", 52, 4, p.45-55, Apr. 2001
Nonpatent Document 2: Maeda, "Journal of Japan Institute of Electronics Packaging", 5, 1, p.25-26, Jan. 2002
Nonpatent Document 3: Inaga, "50th National Congress for Environmental Studies, Science Council of Japan", 14, p.25-32, 1999

Moreover, EP-A-1 486 455, which is prior art according to Art. 54(3) EPC, discloses a microfluid-system supporting unit comprising a first supporting plate and at least one hollow filament constituting a channel of the microfluid-system and being placed on the first supporting plate.
Further, FR-A-2 813 073 discloses a microfluid-system having a supporting unit comprising a first supporting plate having engraved grooves forming the channels of the microfluid-system. For connection with another system capillaries may be inserted and sealed in the grooves. DE-A-432 08 697 discloses a reactor assembly comprising hollow capillary fibers which may be stacked in different directions and are permeable to enrich a first fluid with a second fluid.
A similar apparatus for the separation of a fluid into permeate and retentate portions is known from US-A-4,959,152. Moreover, US-A-5,070,606 discloses a cooling plate for electronic circuit components or a fluid heat exchanger which are manufactured by using hollow filaments embedded in a body.

Disclosure of the Invention

(Problems to be Solved by the Invention)

The present invention is made after intensive studies to solve the problems above. An object of the present invention is to provide a supporting unit of microfluid system compared to the supporting unit of non-patent document 3 having a smaller restriction on the number of the steps and capacity of the reaction and analysis that can be produced easily.

(Means for Solving the Problems)

For achieving the object above, the present invention provides a microfluid-system supporting unit, comprising the features of claim 1, 2 or 3.
A hollow filament is used as the channel. Thus, such a supporting unit has high accuracy and is produced easily, and provides a multifunctional microfluid system having no restriction on the number of the steps and capacity of the reaction and analysis. Further, it is possible to perform chemical operations such as diverse adsorption/desorption, partition, separation, and concentration successively in multiple steps in a simple structure. As a result, it is possible to provide a more multifunctional microfluid-system supporting unit having no restriction on the number of the steps and capacity of the reaction and analysis. It also provides a small microfluid-system supporting unit carrying a complicated fluid circuit in smaller space, allowing reduction in size of the microfluid system itself.

Embodiments of the present invention are named in the dependent claims.
In the present invention at least one hollow filament may be placed crosswise to the hollow filament itself.

Such a supporting unit has high accuracy and is produced easily , because the hollow filaments can be placed three-dimensionally, and has no restriction on the number of the steps and capacity of the reaction and analysis. It also provides a multifunctional microfluid-system supporting unit. It also provides a small microfluid-system supporting unit carrying a complicated fluid circuit in smaller space, allowing reduction in size of the microfluid system itself.
In the present invention at least one hollow filament port for at least one of receiving or discharging a fluid may be fixed to at least one of the first and second supporting plates.

In this way, it is possible to prevent troubles such as the breakage of hollow filament due to operation of connecting and disconnecting the port.

In the present invention a relay unit for connecting the hollow filaments to each other may be provided.

In this way, it is possible to connect tubes different in function to each other in ease and perform, for example, a multi-step reaction.

(Effect of the Invention)

The microfluid-system supporting unit according to the present invention is produced easily. There is smaller restriction on the number of the steps and capacity of the reaction and analysis. In addition, it is possible to ensure a long channel length of the cm order.

As a result, the microfluid-system supporting unit according to the present invention provides a fluid circuit (microfluid system) superior in accuracy and smaller in the deviation during production. It is also possible to provide a small microfluid system carrying a complicated fluid circuit, because at least one hollow filament may be placed crosswise three-dimensionally.

Brief Description of the Drawings

Figure 1(a) is a sectional view illustrating the microfluid-system supporting unit in the first embodiment of the present invention; and Figure 1(b) is a top view of the unit of Figure 1(a), of which the sectional view as seen in the arrowed Ia-Ia line direction corresponds to Figure 1(a).
Figure 2 is a perspective view illustrating the hollow fiber for the microfluid-system supporting unit in the second embodiment of the present invention;
Figure 2(a) is a perspective view of the hollow filament in the area where it is exposed in the face of the unit; and Figure 2 (b) is a perspective view of the hollow filament in the area where it is exposed outside the face of the unit.
Figure 3(a) is a perspective view illustrating the microfluid-system supporting unit having a port (opening) in the third embodiment of the present invention; and Figure 3(b) is a perspective view illustrating the microfluid-system supporting unit having a port (needle) in the third embodiment of the present invention.
Figure 4 is a perspective view illustrating the microfluid-system supporting unit having a joint in the fourth embodiment of the present invention.
Figure 5 is a perspective view illustrating the microfluid-system supporting unit having a joint in the fifth embodiment of the present invention.
Figure 6(a) is a perspective view of the microfluid-system supporting unit having a relay unit in the sixth embodiment of the present invention; and Figure 6 (b) is a sectional view of the supporting unit of Figure 6(a) as seen in the arrowed VIa-VIa direction.
Figure 7(a) is a sectional view, as seen in the arrowed VIIa-VIIa line direction, of the top view of the microfluid-system supporting unit in the seventh embodiment of the present invention shown in Figure 7(c); and Figure 7(b) is a sectional view of the top view shown in Figure 7(c), as seen in the arrowed VIIb-VIIb line direction.
Figure 8 is a perspective view of the microfluid-system supporting unit in the eighth embodiment of the present invention.
Figure 9 is a perspective view of the microfluid-system supporting unit in the ninth embodiment of the present invention.

(Description of the Reference Numerals)

1: First supporting plate
2: Second supporting plate
301 to 308 and 311 to 318: Functional particular regions 41: Hole
42: Needle
58, 501 to 508, and 511 to 518: Hollow filaments
59: Metal layer
6: Relay unit
8a and 8b: Adhesive layers
9: Exposure window

Best Mode for Carrying out the Invention

The embodiments according to the present invention will be described below with reference to drawings. In the following drawings, the same or a similar number is allocated to the same or a similar part. However, drawings are only schematic, and thus, it should be understood that the relationship between thickness and planar dimension and the ratio of the thickness of each layer in these drawing may be different from the actual values. Thus, typical thickness and dimension should be decided according to the following description. Needless to say, there are some parts different from each other in dimension and ratio in the following drawings.

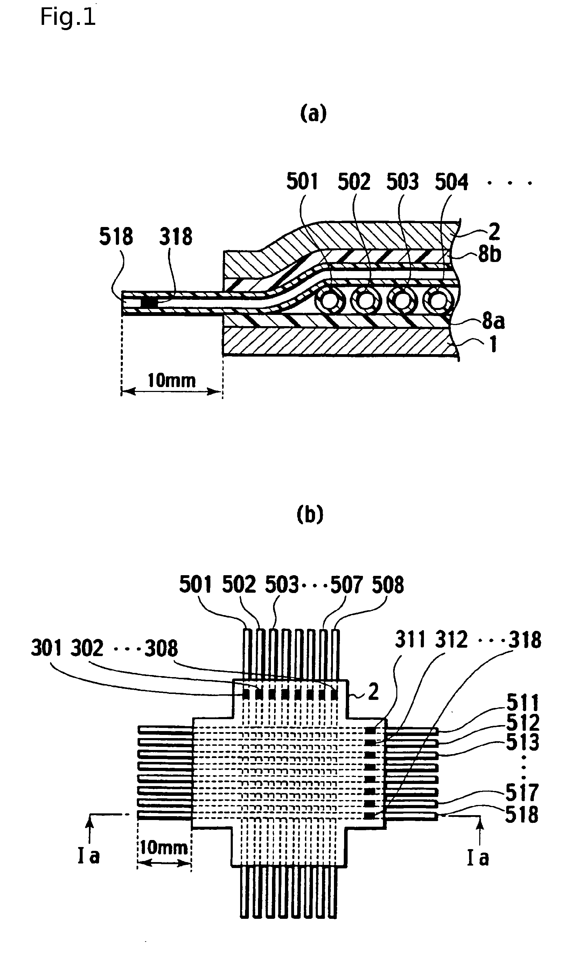

Figure 1 is a schematic view illustrating the microfluid-system supporting unit in the first embodiment of the present invention. Figure 1(a) is a crosssectional view of the microfluid-system supporting unit; and Figure 1(b) is a top view of the unit of Figure 1(a), of which the sectional view as seen in the arrowed Ia-Ia line direction corresponds to Figure 1(a). As shown in Figure 1(a) and (b), the microfluid-system supporting unit in the first embodiment of the present invention has a first supporting plate 1; a first filament bundle of multiple hollow filaments in any shape 501 to 508 placed on the first supporting plate 1; and a second filament bundle of multiple hollow filaments 511 to 518, placed in the direction crosswise to a first filament bundle of thatabove. The supporting unit has a second supporting plate 2 on the side of the hollow filaments opposite to the first supporting plate 1. The first and second filament bundles are held between the first supportingplate 1 and the second supporting plate 2 respectively with adhesive layers 8a and 8b.

Each of these hollow filaments has a functional particular region 301 to 308 or 311 to 318 internally. These multiple hollow filaments make a channel for delivery of drug solutions in the microfluid-system supporting unit in the first embodiment. The first and second filament bundles are placed crosswise. Although it is difficult or impossible, for example of chemical chip, to place a channel crosswise on the same plane, the first and second filament bundles according to the invention can be formed crosswise easily.

The inner and outer diameters of the hollow filament may vary according to applications, but the inner diameter is preferably, approximately φ0.01 to 1.0 mm, because the flow rate per unit time is often in the order of milliliter (mL) to microliter (μL). A resin material such as polyimide (PI), polyether ether ketone (PEEK), polyetherimide (PEI), polyphenylene sulfide (PPS), or tetrafluoroethylene-perfluoroalkoxyethylene copolymer (PFA) is particularly favorably used in preparation of the hollow filament having such diameters. An inner diameter of less than φ0.01 mm may lead to troubles such as clogging, because the influence of the interfacial resistance between the internal wall of hollow filament and the fluid becomes considerably higher. On the other hand, an inner diameter of more than φ1.0 mm may possibly demand high pressure to feed fluid continuously, leading for example to increase of the load on other parts and contamination of the liquid by air bubbles. The hollow filament is preferably chemically resistant, if the fluid flowing in the hollow filament is chemically reactive.

Various commercially available tubes different in raw material may be used as the hollow filament, and any one of such tubes may be used, as selected properly according to applications. Examples thereof include organic materials such as polyvinyl chloride resin (PVC), polyvinylidene chloride resin, polyvinyl acetate resin, polyvinylalcohol resin (PVA), polystyrene resin (PS), acrylonitrile-butadiene-styrene copolymer resin (ABS), polyethylene resin (PE), ethylene-vinyl acetate copolymer resin (EVA), polypropylene resin (PP), poly-4-methylpentene resin (TPX), polymethylmethacrylate resin (PMMA), polyether ether ketone resin (PEEK), polyimide resin (PI), polyether imide resin (PEI), polyphenylene sulfide resin (PPS), cellulose acetate, polytetrafluoroethylene resin (PTFE), tetrafluoroethylene-propylene hexafluoride copolymer resin(FEP), tetrafluoroethylene-perfluoroalkoxyethylene copolymer resin (PFA), ethylene-tetrafluoroethylene copolymer resin (ETFE), polyethylene trifluoride chloride resin (PCTFE), polyvinylidene fluoride resin (PVDF), polyethylene terephthalate resin (PET), polyamide resin (such as nylon), polyacetal resin (POM), polyphenyleneoxide resin (PPO), polycarbonate resin (PC), polyurethane resin, polyester elastomer, polyolefin resin, and silicone resin; inorganic materials such as glass, quartz, and carbon; and the like.

The functions of the internal particular region in hollow filament 301 to 308, or 311 to 318 include adsorption-desorption, ion exchange, separation, removal, partition, and oxidation-reduction. The particular regionpreferablyhas at least one of the functions described above.

When the function is given to at least one hollow filament by packing a filler, the filler may be selected from inorganic fillers and resin fillers according to applications. The inorganic fillers include, for example, materials based on silica gel, activated carbon, alumina, zirconia, titania, or the like. Silica gel filler is preferably used at a pH of 8 or less, because it is soluble in basic aqueous solutions. Examples of the resin fillers include synthetic polymer gels such as of styrene-divinylbenzene copolymer and polymethacrylate, natural polymer gels, and the like. The hardness and micropore size of the resin fillers are easier to adjust according to applications, and the resin fillers can be used in a wide pH range (approximately pH 2 to 13). A particular DNA probe, antibody, or ion exchange, or alternatively, for example, a catalytic metal, maybe introduced onto the surface of the filler according to applications. Examples of the functions provided to the hollow filament by filler packing include adsorption-desorption, ion exchange, separation, removal, partition, oxidation-reduction, and the like.

When the function is desirably endowed by graft polymerization in the particular internal region of at least one hollow filament, for example, use of a radiation-induced graft polymerization method is preferable. Graft-polymerization side chains are formed, for example, by a glycidyl methacrylate (GMA) monomer coming in contact with a generating radicals by irradiating a particular region of the tube for hollow filament with an energy-rich radiation ray such as electron beam or gamma ray. A desirable functional group is introduced on the side chains. Processing by graft polymerization is preferably, because it is possible to introduce a functional group in a particular region of a tube in any shape and give the tube various functions. Examples of the functions endowed to the hollow filament by graft polymerization include adsorption-desorption, ion exchange, separation, partition, and the like.

If the function is endowed by forming a porous material in the particular internal region of at least one hollow filament, for example, use of a porous silica material is preferable. It is possible to prepare the porous structure of the porous silica material having a small diameter of φ0.01 to 0.1 mm in a hollow filament easily, because it is formed by supplying and polymerizing a monomer in the hollow filament. It is also possible to give a function according to applications, because the specification of the porous material structure (raw material, skeletal size, pore size, surface modification, and the like) is freely adjustable. Examples of the functions endowed by forming a porous material in the hollow filament include adsorption-desorption, ion exchange, separation, partition, and the like.

When a function for a photochemical reaction or spectrometric analysis is endowed by irradiation of the fluid flowing in hollow filament with light, the particular region of at least one hollow filament for the photochemical reaction or spectrometric analysis is preferably transparent to light. The light transparency may vary according to applications, but is preferably 80% or more, more preferably 90% or more, at the desirable wavelength. In such a case, the first supporting plate 1 and/or the second supporting plate 2 in the regions close to the particular region of hollow filament preferably satisfy the requirement in light transparency described above. If present, the adhesive layers in the regions close to the particular region of hollow filament are also preferably light transparent.

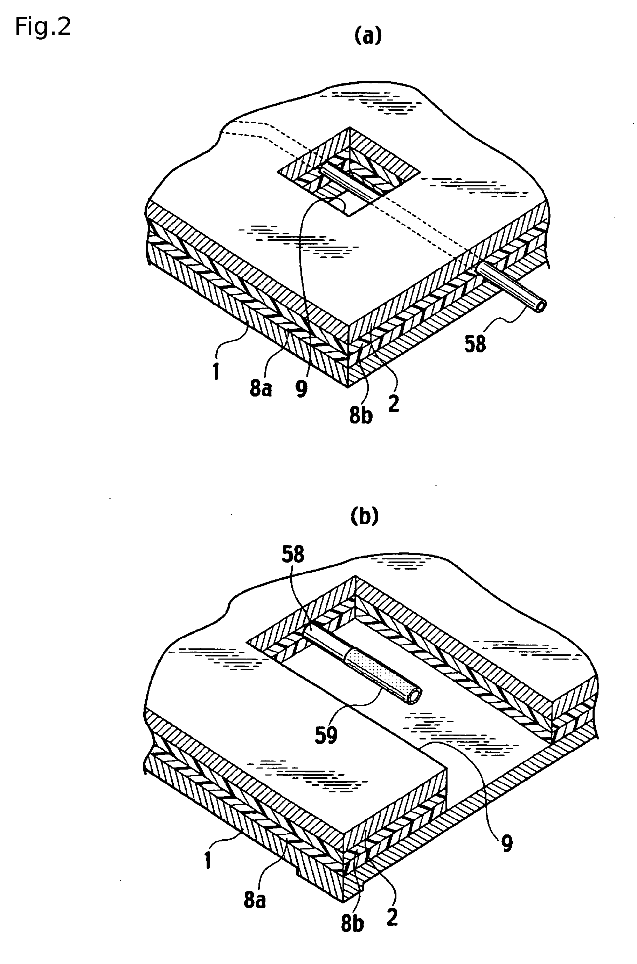

Figure 2 is a perspective view illustrating the structure of a hollow filament in the microfluid-system supporting unit in the second embodiment of the present invention; Figure 2(a) is a perspective view of a hollow filament 58 in the area where it is exposed in the face of the unit in the both directions; and Figure 2(b) is a perspective view of the hollow filament in the area where it is exposed outside the face of the unit. As shown in Figure 2 (a), an exposure window 9 maybe favorably formed through the first supporting plate 1 and the adhesive layer 8a and/or the second supporting plate 2 and the adhesion 8b, exposing the hollow filament 58. That is, part of at least one hollow filament is preferably exposed through the first supporting plate, or alternatively, through the first supporting plate and/or the second supporting plate, if the second supporting plate is present. If the adhesive layer is light low-transparent or opaque, the hollow filament is preferably placed in such a way that it is exposed through the adhesive layer.

A metal layer may be formed on a particular region of at least one hollow filament. For example as shown in Figure 2 (b), it is possible to form a terminal, for example for applying voltage, by forming a metal layer 59 on part of the exposed hollow filament 58. In such a case, a single layer or multiple layers of Cu, Al, nickel (Ni), chromium (Cr), gold (Au), or the like are formed by plating or vapor deposition favorably.

In the microfluid-system supporting unit according to the present invention, at least one hollow filament in any shape having no function in the particular internal region may be placed on the first supporting plate. For example in environmental analysis, some samples are collected without pretreatment for reference. In the present invention, it is possible to satisfy the requirements above easily, because a hollow filament having no function for reference sample may be placed together with hollow filaments having a function.

At least one hollow filament may be placed crosswise with at least another hollow filament. The channels are to be placed in the number according to the desirable analysis samples and reaction steps. The channel should also have a certain length needed for temperature adjustment, securement of reaction time, and others. In such cases, it is possible to wire the channels (hollow filaments) without need for considering the wiring-prohibited area during pattern design, because the hollow filaments may be placed crosswise freely.

At least one hollow filament may be placed crosswise to the hollow filament itself. An example thereof is a reactor unit of causing a reaction by delivering raw materials to the region of the filament having a certain function by feeding them into the hollow filament continuous or intermittently. In many cases, the raw materials flowing in the region of a hollow filament present are heated or cooled, by bringing a temperature control device such as heater or Peltier element into contact with a particular region of the reactor unit. For high-efficiency and high-speed temperature control, it is necessary to place a filament having a certain length in the region in contact with the device and eliminate the filament in other regions as much as possible. Advantageously in the present invention, it is possible to form a spiral-patterned hollow filament while the hollow filament is wound crossing itself in the region and thus secure a needed length.

Layers of an adhesive agent (see adhesive layers 8a and 8b in Figure 1(a)) may be formed on the hollow filament-sided surface of the first supporting plate and/or the second supporting plate, to make fixation of the hollow filament easier. Favorable examples thereof are described in International Application Published with No. WO 03/070623.

For example, the first adhesive layer 8a formed on the surface of the first supporting plate 1 is preferably made of a pressure-sensitive or photosensitive adhesive agent.

Generally, these materials are sensitive to pressure, light, and heat. Application of such a stimulus, which increases the tackiness, adhesiveness, and tenacity by embedding, is favorable when the hollow filament (hollow capillary) pattern is placed mechanically.

The pressure-sensitive adhesive is favorably an adhesive agent of a high-molecular weight synthetic rubber or silicone resin.

Examples of the high-molecular weight synthetic rubber adhesive agents include isobutylene polymers such as Vistanex® (registered by Exxon Mobil Corp.) MML-120 (trade name, manufactured by Tonex Co. Ltd.), acrylonitrile-butadiene rubbers such as Nipol® (registered by Zeon Corp.) N1432 (trade name, manufactured by Zeon Corporation), chlorosulfonated polyethylenes such as Hyperlon® 20 manufactured by E.I. du Pont de Nemours and Company, and the like. In such a case, the first adhesive layer 8a may be formed by dissolving these materials in a solvent and coating directly and drying the solution on the first supporting plate 1. A crosslinking agent may be added to these materials as needed additionally. Acrylic resin-based two-sided adhesive tapes such as Product No. 500 manufactured by Nitto Denko Corporation and VHB® (registered by BM Comp.) A-10, A-20, A-30 (trade name, manufactured by 3M) and others may also be used.

Favorable examples of the silicone resin-based adhesive agents include silicone adhesive agents containing a silicon rubber of a high-molecular weight polydimethylsiloxane or polymethylphenylsiloxane having a silanol group at the terminal and a silicon resin such as methylsilicone resin or methylphenylsilicone as the principal components. The resin may be crosslinked in various ways, for adjustment of its aggregation potential. The crosslinking may be performed, for example, by addition reaction of silane, alkoxy condensation reaction, acetoxy condensation reaction, or radical reaction for example with a peroxide. Commercially available products of the adhesive agent include YR3286 (trade name, manufactured by GE Toshiba Silicones Co., Ltd.), TSR1521 (trade name, manufactured by GE Toshiba Silicones Co., Ltd.), DKQ9-9009 (trade name, manufactured by Dow Corning), and the like.

Examples of the photosensitive adhesive agent include dry-film resists and solder-resist inks used as the etching resist for printed circuit boards, photosensitive build-up materials for printed circuit boards, and the like. Specific examples thereof include H-K440 (trade name, manufactured by Hitachi Chemical Co., Ltd.), Probimer manufactured by Ciba-Geigy Corp., and the like. In particular, the photobia materials used in the build-up wiring board application withstand the conditions in the production process of printed wiring boards and the component-mounting step with a solder. Any one of these materials may be used, if it is a composition containing a copolymer or monomer having a photocrosslinkable functional group and/or a composition containing a photocrosslinkable and thermal crosslinkable functional group and a thermal polymerization initiator.

Examples of the photosensitive adhesive agents include epoxy resin, brominated epoxy resin, alicyclic epoxy resins such as rubber-modified epoxy resin, and rubber-dispersed epoxy resin, bisphenol A-based epoxy resins, and acid-modified derivatives of these epoxy resins, and the like. In particular, unsaturated acid-modified derivatives of these epoxy resins are used favorably, when the resin is hardened by photoirradiation. Examples of the unsaturated acids include maleic anhydride, tetrahydrophthalic anhydride, itaconic anhydride, acrylic acid, methacrylic acid, and the like. The modified product is prepared by allowing an unsaturated carboxylic acid to react with the epoxy groups of an epoxy resin at a blending ratio equivalent to 1 or less.

Other favorable examples thereof include thermosetting materials such as melamine resin and cyanate ester resin, combinations thereof with a phenol resin, and the like. It is possible to harden the adhesive even in the region behind crossing channels where no light is irradiated, by adding such a thermosetting material.

In addition, a natural rubber or the high-molecular weight synthetic rubber described above such as acrylonitrile-butadiene rubber, acrylic rubber, SBR, carboxylic acid-modified acrylonitrile butadiene rubber, carboxylic acid-modified acrylic rubber, crosslinked NBR particles, or carboxylic acid-modified crosslinked NBR particles may be added, to give flexibility.

It is possible to give the hardened product various properties, while preserving the basic performance in light hardening and thermosetting efficiency, by adding one of the various resin components above. For example, combination of an epoxy resin and a phenol resin gives a hardened product favorable in electric resistance. When a rubber component is blended it is possible to give the hardened product toughness and to make the surface of the hardened product roughened by surface treatment with an oxidative drug solution.

It is also possible to add commonly used additives (polymerization stabilizer, leveling agent, pigment, dye, etc.). A filler may also be blended. Examples of the fillers include inorganic fine particles such as of silica, fused silica, talc, alumina, hydrated alumina, barium sulfate, calcium hydroxide, Aerojil, and calcium carbonate; organic fine particles such as of powdery epoxy resin and powdery polyimide particle; powdery polytetrafluoroethylene particles, and the like. The filler may be processed previously by coupling treatment. These materials are dispersed, for example, by a known blending method, for example, in a kneader, ball mill, bead mill, or three-roll mill.

The photosensitive resin may be formed by a method of coating a liquid resin for example by a method of roll coating, curtain coating, or dip coating, or laminating an insulative resin film on a carrier film. Specific examples thereof include photobia film product BF-8000, manufactured by Hitachi Chemical Co., Ltd. and the like.

Various materials used for the first adhesive layer 8a may also be used for the second adhesive layer 8b.

The method of placing, or preferably fixing, hollow filaments on the first supporting plate is advantageous in that it is possible to control various environmental factors such as surrounding temperature, electric field, and magnetic field more easily than when the hollow filaments are used alone. The method is particularly advantageous when a chemical reaction or analysis is carried out especially in a microreaction and microanalysis system. It is also advantageous in that it is possible to place multiple hollow filaments densely, it is easy to be aligned with other components and to be connected with.

In chemical analysis, it is advantageous to have multiple hollow filaments for improving operational efficiency. In such a case, the multiple hollow filaments are preferably the same in length as each other, from balancing the conditions such as reaction time, electrophoretic distance, and the amount of energy applied. That is, it is preferable to make an energy applied to the sample during its flow from the inlet to the outlet of channel identical and to make the energy transmitted from a hollow filament to other hollow filaments almost the same. From the viewpoint above, it is preferable to make the hollow filaments held between two or more supporting plates, so that the distribution of the heat between the hollow filaments is uniformized. Thus, the microfluid-system supporting unit according to the present invention preferably has a structure having an additional second supporting plate, so that at least one hollow filament is held between the first and second supporting plates.

The multiple hollow filaments are placed, as they are separated from each other at the same distance. Further, the thickness of between inner and outer of the multiple hollow filament is preferably the same.

The material, shape and size of the first and second supporting plates may be selected properly according to applications, and the favorable ranges of the plate thickness, film thickness, and others often vary according to the purpose and the desirable function. For example, for improvement in electric resistance, favorable are epoxy and polyimide resin plates used in printed wiring boards and others; and polyimide films such as Kapton® film manufactured by E.I. du Pont de Nemours and Company, PET films such as Lumirror® film manufactured by Toray Industries, Inc., and PPS films such as Torelina® film manufactured by Toray Co., Ltd that are used for flexible printed wiring boards; and the like. The plate thickness (film thickness) of the first supporting plate is preferably thicker, more preferably 0.05 mm or more, for improvement in electric resistance.

Alternatively, use of a metal foil or plate such as of aluminum (Al), copper (Cu), stainless steel, or titanium (Ti) is preferable for improvement of the heat-releasing efficiency of the first supporting plate. In such a case, the thickness of the first supporting plate is preferably further thicker, more preferably 0.5 mm or more.

Alternatively for giving the first supporting plate a light-transmitting property, selection of an inorganic material plate or film such as of glass or quartz plate or an organic material plate or film such as of polycarbonate or acrylic resin is preferable. In such a case, the plate thickness (film thickness) of the first supporting plate is preferably thinner, more preferably 0.5 mm or less.

A so-called flexible circuit board or printed circuit board having a metal pattern for example of copper formed on the surface by etching, plating, or the like may be used as the supporting plate. It is thus possible to form a terminal or a circuit having various mounted parts and elements including micromachine, heating element, piezoelectric element, various sensors of temperature, pressure, deformation, vibration, voltage, magnetic field, and others; electronic parts such as resistance, capacitor, coil, transistor, and IC; optical parts such as semiconductor laser (LD), light-emitting diode (LED), and photodiode (PD), and thus to simplify the system easily.

The various materials used for the first supporting plate 1 described above may also be used for the second supporting plate 2. Presence of a second adhesive layer 8b between the second supporting plate 2 and the second filament bundle of multiple hollow filaments 511 to 518 is preferable, because it is more effective in improving protection of the a first filament bundle of multiple hollow filament 501 to 508 and the second filament bundle. Use a mesh or porous film or fabric as the second supporting plate 2 prevents troubles such as enclosure of air bubbles during lamination. Examples of the mesh films or fabrics include polyester mesh TB-70 (type) manufactured by Tokyo screen Co., Ltd.,

and the like. Examples of the porous films include Duraguard® (registered by Polyplastic Co., Ltd.) (trade name, manufactured by Celanese Chemicals), Celgard® (registered by Celgard Inc.) 2400 (trade name, manufactured by Daicel Chemical Industries), Ltd., and the like.

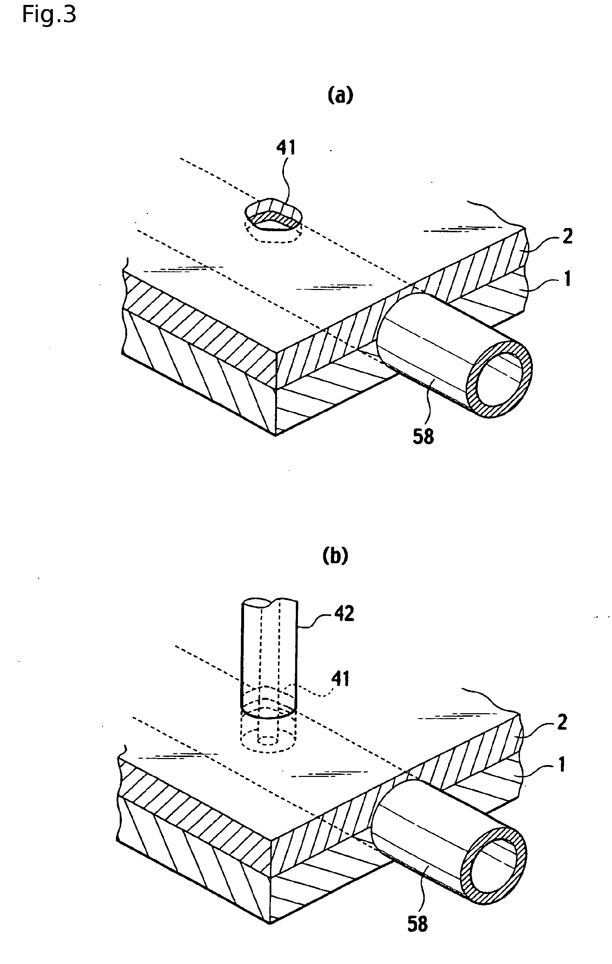

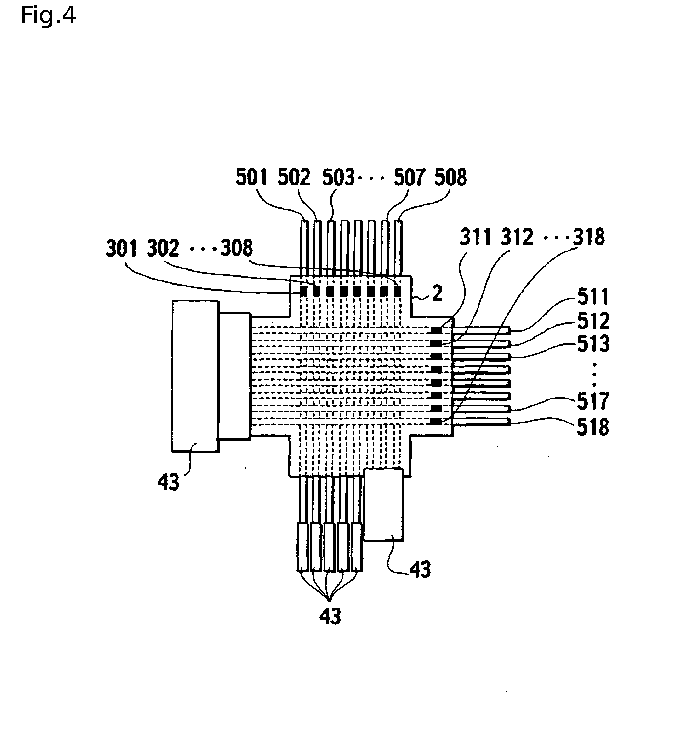

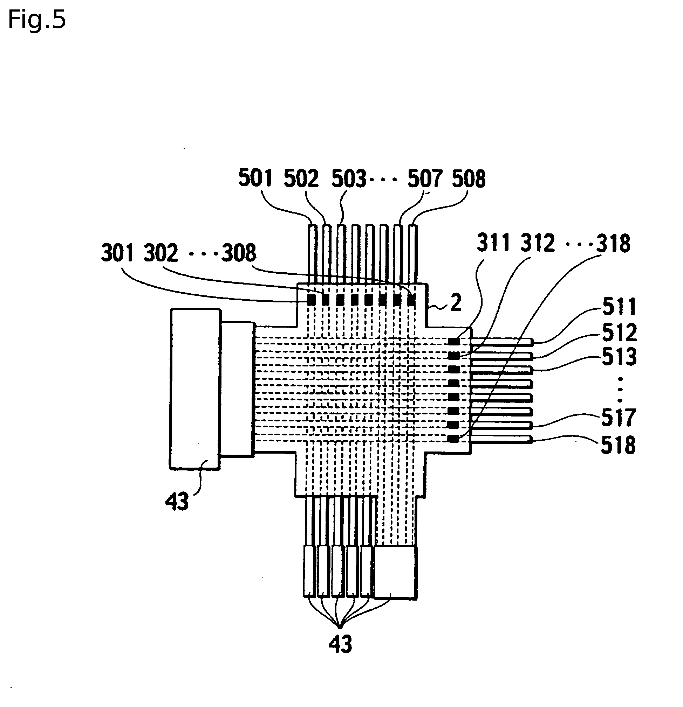

At least one hollow filament preferably has an inlet port for receiving a fluid from outside and/or an outlet port for discharging the fluid to outside. The structure, shape, and position of the ports are arbitrary. Figure 3 (a) is a perspective view of the microfluid-system supporting unit having a port (opening) in the third embodiment of the present invention, and Figure 3(b) is a perspective view of the microfluid-system supporting unit having a port (needle) in the third embodiment of the present invention. Figure 4 is a perspective view of the microfluid-system supporting unit having a joint in the fourth embodiment of the present invention. Figure 5 is a perspective view of the microfluid-system supporting unit having a joint in the fifth embodiment of the present invention.

It is formed, for example, by a method shown in Figure 3 (a) of forming a hole 41 having a diameter almost the same as or smaller than the inner or outer diameter of the hollow filament 58, for example by laser-beam machining or cutting, and sealing the hole with a silicone rubber (not shown in the Figure), or a method shown in Figure 3 (b) of thrusting a needle 42 having a diameter almost the same into the hollow filament 58 and fixing the needle 42. Alternatively, it may be formed by a method of forming a joint 43 for fluid at the terminal of the hollow filament, as shown in Figures 4 and 5. The port such as the joint 43 is preferably fixed to the first supporting plate or to the first supporting plate and/or the second supporting plate if the second supporting plate is present. In this way, it is possible to prevent troubles such as the breakage of hollow filament due to the operation of connecting or disconnecting the port. Any type, single cored or multi-cored, may be used according to applications. It is also possible to prepare a high-performance microfluid-system supporting unit, by forming a joint having a valving or filtering function.

Although the size of the hole 41, needle 42, joint 43, and others is arbitrary, care should be given to the size, because an excessively large diameter, for example of twice or more, may lead to decrease in the advantage of miniaturization by increase in unneeded capacity and possibly cause contamination of air bubbles.

The hollow filament 58 is preferably elastic, when a microfluid-system supporting unit having a through hole in part thereof is used as a micropump or a microvalve, while the fluid therein is fed in pulsed flow by a cam motor, by applying a sequential force to part of the hollow filament 58 and thus deforming the region of the hollow filament for example. In particular, the hollow filament 58 preferably has a Young's modulus of $10^3$ MPa or less.

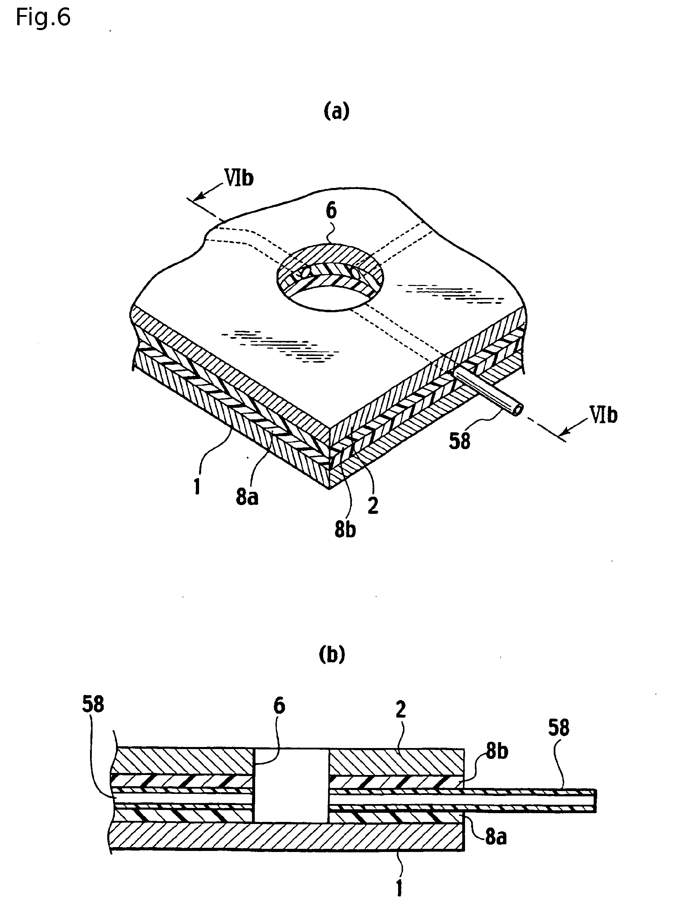

Figure 6 (a) is a perspective view of the microfluid-system supporting unit having a relay unit in the sixth embodiment of the present invention, and Figure 6 (b) is a sectional view of the supporting unit of Figure 6 (a) as seen in the arrowed VIa-VIa direction. The microfluid-system supporting unit according to the present invention preferably has an opening of relay unit 6, as shown in Figure 6 (a) and Figure 6 (b). The relay unit 6 connects the channels of hollow filament, and has a structure in which a hollow filament 58 is exposed between the first adhesive layer 8a and the second adhesive layer 8b. The exposed hollow filament 58 feeds a fluid. The relay unit 6 mixes or distributes the fed fluid. The shape and size of the relay unit 6 are decided properly according to the flow rate of the fluid. For example, when the total thickness of a channel consisting of 2 to 3 hollow filaments 58 having an inner diameter of φ200 μm and the first adhesive layer 8a and the second adhesive layer 8b holding the hollow filaments 58 is 200 μm, the relay unit 6 may be in a circular rod shape having a diameter of approximately φ2 to 7 mm. It is possible to mix the fluid flowing in the hollow filaments 58 and distribute it from the relay unit 6. It is also possible to inject a new fluid into the relay unit inward and withdraw the fluid in the relay unit 6 outward, by making the relay unit 6 have an open structure by integrating the second supporting plate 2 with the relay unit 6. If the relay unit 6 is only for mixing or distribution, the relay unit may be in a closed structure in which the second supporting plate 2 does not have an opening.

The hollow filaments should not be always crossed at an angle of 90 degrees, but may be crossed at any angle.

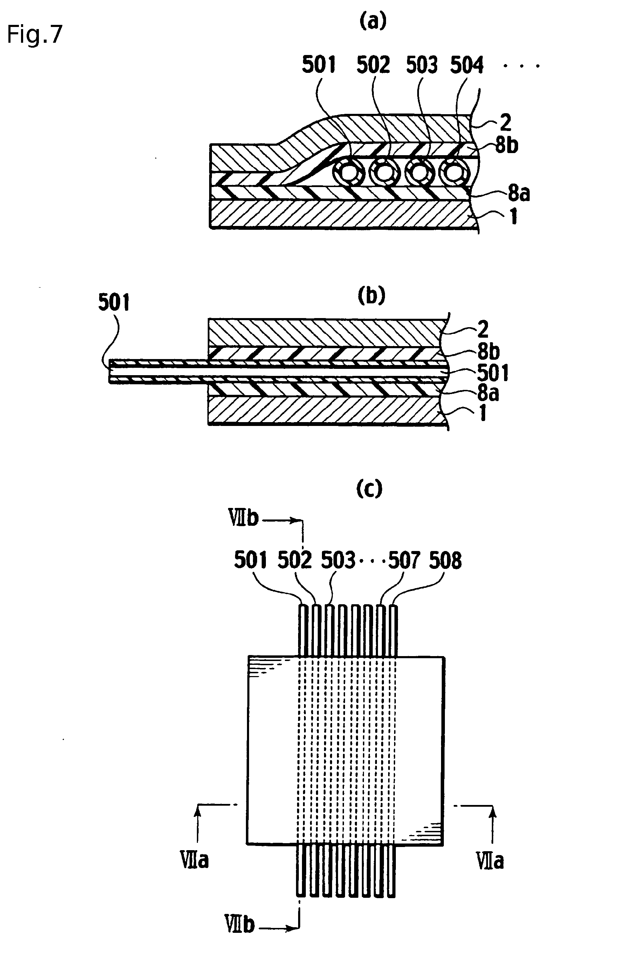

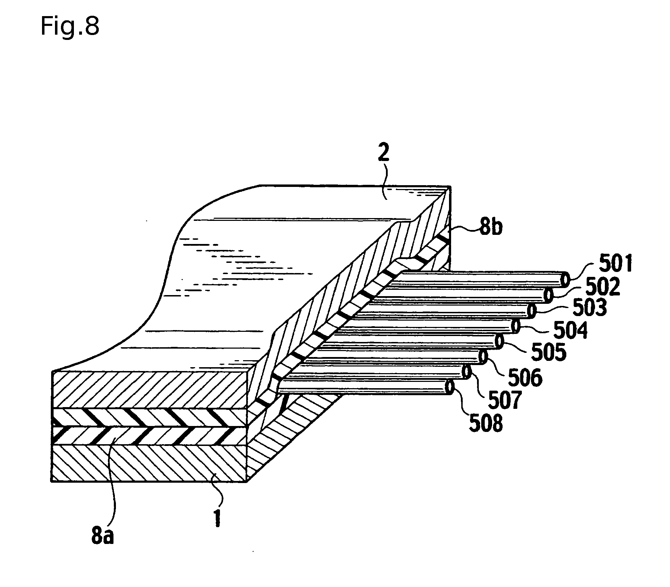

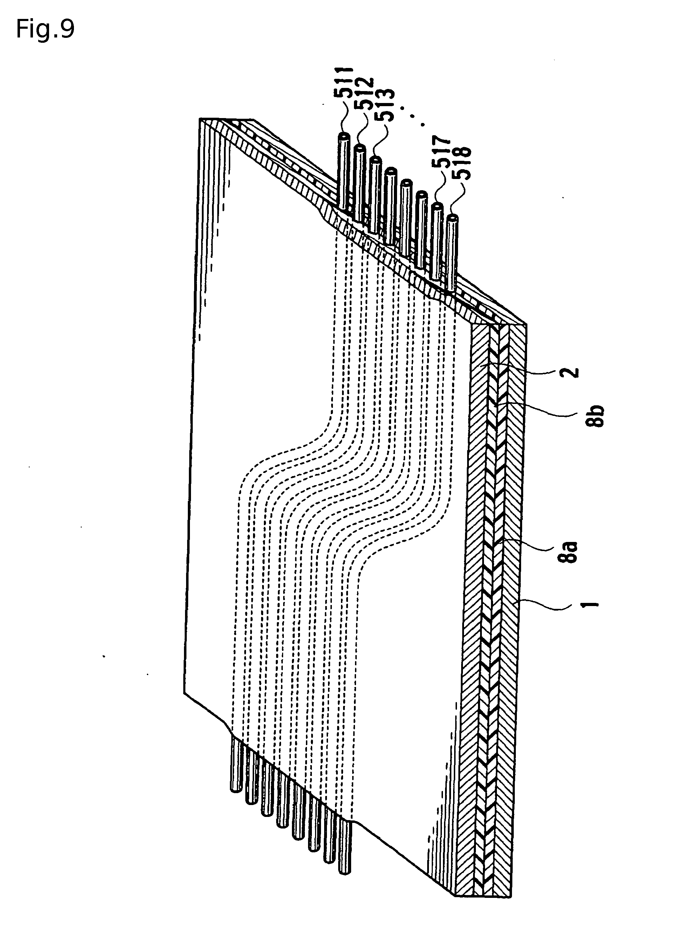

The hollow filaments may not be crossed at all. Figure 7 (a) is a sectional view of the top view of the microfluid-system supporting unit in the seventh embodiment of the present invention shown in Figure 7(c), as seen in the arrowed VIIa-VIIa line direction, and Figure 7(b) is a sectional view of the top view shown in Figure 7(c) as seen in the arrowed VIIb-VIIb line direction. The particular region having a function is not shown in Figures 7 to 9. Figure 8 is a perspective view of the microfluid-system supporting unit in the eighth embodiment of the present invention. As shown in Figures 7 (a) to 7(c) and 8, the hollow filaments may contain only multiple hollow filaments 501 to 508 extending in one direction. Figure 9 is a perspective view of the microfluid-system supporting unit in the ninth embodiment of the present invention. As shown in Figure 9, multiple curved hollow filaments 511 to 518 may be placed.

The hollow filaments may not be placed in multiples, and thus, a single hollow filament may be placed.

(EXAMPLES)

Hereinafter, the present invention will be described more specifically with reference to examples.

(Preparative Example 1)

A laminate of a polyimide film 300H having a thickness of 75 μm Kapton®, manufactured by E.I. du Pont de Nemours and Company) as the first supporting plate 1 and an adhesive layer, adhesive film (trade name: VHB® A-10 film, manufactured by 3M) that is adhesive at room temperature having a thickness of 250 μm was used. Hollow filaments 501 to 508 and 511 to 518 of a high-performance engineering plastic tube (material: PEEK, inner diameter: 0.2 mm, outer diameter: 0.4 mm) manufactured by Nirei Industry Co., Ltd. were placed at desirable positions on the first supporting plate 1, by using an NC wiring apparatus allowing ultrasonic vibration as well as load-output and NC control and having a movable X-Y table.

A load of 80 g and ultrasonic vibration at a frequency of 30 kHz were applied to the hollow filaments 501 to 508 and 511 to 518 in the shape of circular arc of 5 mm in radius, and crosswise oriented regions were also formed. A polyimide film 300H (registered trade name: Kapton®) manufactured by E.I. du Pont de Nemours and Company was used as the second supporting plate 2, and a second hollow filament bundle of multiple hollow filaments 511 to 518 are placed.

The laminate was then cut into a wide cruciform shape along the desired cutting lines shown in Figure 1 (b), while forming holes having a diameter of φ0.2 mm at an interval of 0.1 mm at a pulse width of 5 ms and a shot number of 4 by using a laser-drilling machine for forming fine diameter holes in printed circuit board. A certain area of the first supporting plate 1 close to the terminal of the hollow filaments 501 to 508 and 511 to 518 was then removed, exposing the terminals of 10 mm in length respectively of the first hollow filament bundle of eight hollow filaments 501 to 508 having a total length of 20 cm and the second hollow filament bundle of 8 hollow filaments 511 to 518 having a total length of 20 cm, to give a microfluid-system supporting unit. The hollow filaments in the entire area of placement, in particular in the area at intersection, were not damaged at all.

As a result, the deviation of the position of the channels of the first hollow filament bundle of multiple hollow filaments 501 to 508, and the second hollow filament bundle of multiple hollow filaments 511 to 518 was in the range of ±10 μm with respect to the value designed in the engineering drawing. The microfluid-system supporting unit was placed in a constant-temperature oven at 80°C; a color liquid ink is supplied from one end and the period until the ink flows out of the other end was determined with a measurement device such as stopwatch; the eight hollow filaments ejected the ink almost at the same timing (±1 second or less) from the other end.

(Preparative Example 2)

An aluminum plate having a thickness of 0.5 mm carrying a non-adhesive layer of a pressure-sensitive adhesive S9009 (trade name, manufactured by Dow Corning Asia Co., Ltd.) having a thickness of 100 μm was used as the first supporting plate. Glass tubes ESG-2 manufactured by Hagitec Co., Ltd. (inner diameter 0.8 mm, outer diameter: 1 mm) were placed thereon by using a NC wiring apparatus allowing ultrasonic vibration as well as load-output and NC control and having a movable X-Y table. A load of 100 g and ultrasonic vibration at a frequency of 20 kHz were applied to the hollow filaments placed. The hollow filaments were placed in a circular arc shape having a radius of 10 mm, and areas of intersection were also formed. Application of the load and ultrasonic vibration was eliminated in the area close to the intersection.

A polyimide film 200H Kapton® manufactured by E.I. du Pont de Nemours and Company was used as the second supporting plate and laminated on the hollow filament-carrying supporting unit by vacuum lamination. Thermocouples for temperature measurement were embedded then in the areas close to the inlet, outlet, and intersection of respective hollow filaments.

The composite was cut into a piece in a desirable shape by using an outside shape-processing machine for printed circuit boards. Removal of a predetermined area of the supporting plate gave a microfluid-system supporting unit containing 12 hollow filaments having a total length of 40 cm in the shape in which a region thereof of 50 mm in length is exposed. The deviation of the position of the hollow filaments placed was in the range of less than ±20 μm with respect the value designed in the engineering drawing. The hollow filaments in the entire area of placement, in particular in the area at intersection, were not damaged.

The entire rear face of the aluminum plate was brought into contact with a heater Film Heat FTH-40 manufactured by Kyohritsu Electronic Industry Co., Ltd. which was set to 90°C. Water at approximately 20°C was fed from one end, and the temperature of the water discharged from the other end was determined to be 88±1°C. The temperature of each of the inlet, outlet, and intersection was 89±0.5°C, indicating that the temperature was accurately controlled.

(Preparative Example 3)

A copper foil having a thickness of 35 μm carrying an adhesive agent, which is non-adhesive at room temperature, S9009 (trade name, manufactured by Dow Corning Asia Co., Ltd., thickness: 200 μm) was used as the first supporting plate 1. High-performance engineering plastic tubes (material: PEEK, inner diameter: 0.2 mm, outer diameter: 0.4 mm) manufactured by Nirei Industry Co., Ltd. were placed thereon, by using a multiwire-wiring machine allowing ultrasonic vibration as well as load-output and NC control and having a movable X-Y table. A load of 80 g and ultrasonic vibration at a frequency of 30 kHz were applied to the hollow filaments 58 placed. The hollow filaments 58 were placed in the shape of circular arc of 5 mm in radius, and crossing regions were also formed. Application of the load and ultrasonic vibration was eliminated in the area close to the intersection.

A polyimide film 200H (registered trade name: Kapton®) manufactured by E.I. du Pont de Nemours and Company as the second supporting plate 2, carrying the adhesive agent described above S9009 (trade name, manufactured by Dow Corning Asia Co., Ltd., thickness 200 $\mu$m), was laminated on the hollow filament 58-placed surface by vacuum lamination.

Holes having a diameter of $\varphi$0.2 mm were formed then in the second supporting plate 2 and the hollow filaments 58 at the position of the relay unit 6, by using a laser-drilling machine for forming fine diameter holes in printed circuit board at a pulse width of 5 ms and a shot number of 4. The outside shape was the processed with a rooter, to give a microfluid-system supporting unit having a relay unit 6 to which multiple channels are connected.

The microfluid-system supporting units prepared in Preparative Examples 1 to 3 have a structure that will have an additional function, for example, by packing of a filler, graft polymerization, formation of a porous material, or the like.

(Example 1)

An aluminum plate carrying a non-adhesive pressure-sensitive adhesive manufactured by Dow Corning Asia Co., Ltd. trade name S9009 (thickness 100 $\mu$m) and having a thickness of 0.5 mm was used as the first supporting plate. Fluoroplastic EXLON® (registered by Iwase Co., Ltd.) PFA tubes (trade name, inner diameter: 0.5 mm, outer diameter: 1.5 mm) manufactured by Iwase Co., Ltd., were placed as the hollow filaments, by using an NC wiring apparatus allowing ultrasonic vibration as well as load-output and NC control and having a movable X-Y table. A load of 120 g and ultrasonic vibration at a frequency of 20 kHz were applied to the hollow filaments placed, which were placed closely in the straight-line shape of 40 cm in length. No load or ultrasonic vibration was applied in the area close to the intersection.

A polyimide film 200H (registered trade name: Kapton®) manufactured by E. I. du Pont de Nemours and Company as the second supporting plate was laminated over the hollow filaments by vacuum lamination.

The composite was cut into a piece in a desirable shape by using an outside shape-processing machine for printed circuit boards. Removal of a predetermined area of the supporting plate gave a microfluid-system supporting unit containing 12 hollow filaments having a total length of 40 cm in the shape in which the region thereof of 50 mm in length is exposed. The deviation of the position of the hollow filaments formed was in the range of less than $\pm$20 $\mu$m with respect the value designed in the engineering drawing, and the hollow filaments in the entire area of placement, in particular in the area at intersection, were not damaged.

Then, a metal ion-exchanging function was given thereto by irradiating the particular region of the hollow filaments with electron beam, thus graft-polymerizing glycidyl methacrylate (GMA) thereon, and converting the epoxy groups in the graft polymer chains into the iminodiacetic acid group while supplying an aqueous solution of disodium iminodiacetate/dimethylsulfoxide at a constant temperature and at a constant flow rate into the tube.

For the purpose of confirming the effectiveness of the metal ion-exchanging function of the microfluid-system supporting unit prepared in the present Example, an aqueous copper sulfate solution at a certain concentration $C_0$ was supplied into the tube from one end, and the concentration C of the effluent flowing out of another end was measured. The exchange rate of the copper ion supplied was calculated according to the following Formula:

$$\texttt{Exchange rate (\%) = (C_0-C)/C_0 x 100}$$

The exchange rate was approximately 60%, confirming that the microfluid-system supporting unit had a metal ion-exchanging function.

(Example 2)

Fluoroplastic tubes EXLON® PFA tube, inner diameter: 0.5 mm, outer diameter: 1.5 mm) manufactured by Iwase Co., Ltd. were used. The tubes were cut into pieces of approximately 4 0 cm in length, and were fixed on particular regions 301 to 308, while a polyethylene filter was plugged into each of them from one end. 0.01 cc of a gel pack filler (trade name: TM70, manufactured by Hitachi Chemical Co., Ltd.) was packed in the tubes, to give hollow filaments 501 to 508.

An aluminum plate having a thickness of 0.5 mm carrying a non-adhesive pressure-sensitive adhesive (trade name: S9009, manufactured by Dow Corning Asia Co., Ltd., thickness: 100 μm) was used as the first supporting plate 1. The hollow filaments are placed thereon by using an NC wiring apparatus allowing ultrasonic vibration as well as load-output and NC control and having a movable X-Y table. The hollow filaments 501 to 508 were placed closely in a straight line shape of 40 cm in length, while a load of 150 g and ultrasonic vibration at a frequency of 20 kHz were applied.

A polyimide film 200H (registered trade name: Kapton®) manufactured by E. I. du Pont de Nemours and Company , as the second supporting plate 2 was laminated over the hollow filaments 501 to 508 by vacuum lamination.

The composite was then cut into a piece in a desirable shape by using an outside shape-processing machine for printed circuit boards. Removal of a predetermined area of the supporting plate gave a microfluid-system supporting unit containing 8 hollow filaments 501 to 508 having a total length of 40 cm in the shape in which the region thereof of 50 mm in length is exposed. The deviation of the position of the channels formed with the hollow filaments 501 to 508 was in the range of less than ±20 μm with respect the value designed in the engineering drawing, and the hollow filaments of hollow filaments 501 to 508 in the entire area of placement, in particular in the area at intersection, were not damaged.

For the purpose of confirming the effectiveness of the adsorption/desorption function of the microfluid-system supporting unit prepared in the present Example, the following measurement was performed: One ml of a mixed aqueous solution containing standard reagents (manufactured by Wako Pure Chemical Industries Co., Ltd.) for testing residual agricultural agents such Asulam, oxine copper, Mecoprop, thiuram, Iprodione, and Bensulide respectively at 0.25 ppm was prepared, and injected into each of the hollow filaments 501 to 508 with a microsyringe. Air was supplied to make the entire volume of the liquid injected pass through each of the particular points 301 to 308. The filaments 501 to 508 were then extracted with acetonitrile injected, and the components in the extract were analyzed by HPLC. The results showed that all components were recovered in amounts of 90% with respect to the injected components.

Industrial Applicability

The microfluid-system supporting unit according to the present invention can be produced easily. There is no restriction on the number of the steps and capacity of the reaction and analysis.

It is also possible to obtain a long channel length in the order of cm.

As a result, themicrofluid-system supporting unit according to the present invention provides a fluid circuit (microfluid system) higher in precision and lower deviation during production.

It also provides a miniature microfluid system having a complicated fluid circuit, because at least one hollow filament may be placed crosswise three-dimensionally.

**Claims**

1.  A microfluid-system supporting unit, comprising a first supporting plate (1) and at least one hollow filament (501-508, 511-518) constituting a channel of the microfluid-system and being placed on the first supporting plate, wherein a particular internal region (301-308, 311-318) of the hollow filament is configured so as to have a function selected from the group consisting of adsorption-desorption, ion exchange, separation, removal, partition, and oxidation-reduction, wherein a filler is fixed in the particular internal region of at least one hollow filament to provide the function.

2.  A microfluid-system supporting unit, comprising a first supporting plate (1) and at least one hollow filament (501-508, 511-518) constituting a channel of the microfluid-system and being placed on the first supporting plate, wherein a particular internal region (301-308, 311-318) of the hollow filament is configured so as to have a function selected from the group consisting of adsorption-desorption, ion exchange, separation, removal, partition, and oxidation-reduction, wherein the particular internal region of at least one hollow filament is graft polymerized to provide the function.

3.  A microfluid-system supporting unit, comprising a first supporting plate (1) and at least one hollow filament (501-508, 511-518) constituting a channel of the microfluid-system and being placed on the first supporting plate, wherein a particular internal region (301-308, 311-318) of the hollow filament is configured so as to have a function selected from the group consisting of adsorption-desorption, ion exchange, separation, removal, partition, and oxidation-reduction, wherein a porous material is formed in the particular internal region of at least one hollow filament to provide the function.

4.  The microfluid-system supporting unit according to any one of Claims 1 to 3, wherein more than one hollow filament (501-508, 511-518) are placed.

**5.** The microfluid-system supporting unit according to any one of Claims 1 to 4, wherein at least one hollow filament having no function in the internal particular region is placed additionally on the first supporting plate (1).

**6.** The microfluid-system supporting unit according to any one of Claims 1 to 5, wherein at least one hollow filament (501-508) is placed crosswise to at least another hollow filament (511-518).

**7.** The microfluid-system supporting unit according to any one of Claims 1 to 6, wherein at least one hollow filament is placed crosswise to the hollow filament itself.

**8.** The microfluid-system supporting unit according to any one of Claims 1 to 7, further comprising a second supporting plate (2), wherein at least one hollow filament (501-508, 511-518) is held between the first (1) and second (2) supporting plates.

**9.** The microfluid-system supporting unit according to any one of Claims 1 to 8, wherein at least one of the first (1) and second (2) supporting plates is configured so that a part of at least one hollow filament is exposed through the respective one of the first (1) and second (2) supporting plate.

**10.** The microfluid-system supporting unit according to any one of Claims 1 to 9, wherein at least one hollow filament has a port for at least one of receiving a fluid from outside and discharging it to outside.

**11.** The microfluid-system supporting unit according to Claim 10, wherein the port is fixed to at least one of the first and second supporting plates.

**12.** The microfluid-system supporting unit according to any one of Claims 1 to 11, further comprising a relay unit for connecting the hollow filaments to each other.

**13.** The microfluid-system supporting unit according to any one of Claims 1 to 12, wherein a metal layer (59) is formed on a particular region of at least one hollow filament (58).

**14.** The microfluid-system supporting unit according to any one of Claims 1 to 13, wherein a particular region of at least one hollow filament has a light-transmitting property.

**Patentansprüche**

**1.** Mikrofluidsystem-Halteeinheit umfassend eine erste Halteplatte (1) und wenigstens eine hohle Faser (501-508, 511-518), die einen Kanal des Mikrofluidsystems bildet und an der ersten Halteplatte angeordnet ist, wobei ein bestimmter innerer Bereich (301-308, 311-318) der hohlen Faser so gestaltet ist, dass er eine Funktion aufweist, die aus der Gruppe bestehend aus Adsorption-Desorption, Ionenaustausch, Abscheidung, Entfernung, Trennung und Oxidationsreduktion ausgewählt ist, und ein Füllstoff in dem bestimmten inneren Bereich wenigstens einer hohlen Faser fixiert ist, um die Funktion vorzusehen.

**2.** Mikrofluidsystem-Halteeinheit umfassend eine erste Halteplatte (1) und wenigstens eine hohle Faser (501-508, 511-518), die einen Kanal des Mikrofluidsystems bildet und an der ersten Halteplatte angeordnet ist, wobei ein bestimmter innerer Bereich (301-308, 311-318) der hohlen Faser so gestaltet ist, dass er eine Funktion aufweist, die aus der Gruppe bestehend aus Adsorption-Desorption, Ionenaustausch, Abscheidung, Entfernung, Trennung und Oxidationsreduktion ausgewählt ist, und der bestimmte innere Bereich wenigstens einer hohlen Faser pfropfpolymerisiert ist, um die Funktion vorzusehen.

**3.** Mikrofluidsystem-Halteeinheit umfassend eine erste Halteplatte (1) und wenigstens eine hohle Faser (501-508, 511-518), die einen Kanal des Mikrofluidsystems bildet und an der ersten Halteplatte angeordnet ist, wobei ein bestimmter innerer Bereich (301-308, 311-318) der hohlen Faser so gestaltet ist, dass er eine Funktion aufweist, die aus der Gruppe bestehend aus Adsorption-Desorption, Ionenaustausch, Abscheidung, Entfernung, Trennung und Oxidationsreduktion ausgewählt ist, und ein poröses Material in dem bestimmten inneren Bereich wenigstens einer hohlen Faser ausgebildet ist, um die Funktion vorzusehen.

**4.** Mikrofluidsystem-Halteeinheit nach einem der Ansprüche 1 bis 3, bei der mehr als eine hohle Faser (501-508, 511-518) angeordnet ist.

**5.** Mikrofluidsystem-Halteeinheit nach einem der Ansprüche 1 bis 4, bei der wenigstens eine hohle Faser, die keine Funktion in dem bestimmten inneren Bereich aufweist, zusätzlich an der ersten Halteplatte (1) angeordnet ist.

**6.** Mikrofluidsystem-Halteeinheit nach einem der Ansprüche 1 bis 5, bei der wenigstens eine hohle Faser (501-508) quergerichtet zu wenigstens einer anderen hohlen Faser (511-518) angeordnet ist.

**7.** Mikrofluidsystem-Halteeinheit nach einem der Ansprüche 1 bis 6, bei der wenigstens eine hohle Faser quergerichtet zu der hohlen Faser selbst angeordnet ist.

**8.** Mikrofluidsystem-Halteeinheit nach einem der Ansprüche 1 bis 7, die ferner eine zweite Halteplatte (2) umfasst, wobei wenigstens eine hohle Faser (501-508, 511-518) zwischen der ersten (1) und der zweiten (2) Halteplatte gehalten wird.

**9.** Mikrofluidsystem-Halteeinheit nach einem der Ansprüche 1 bis 8, bei der die erste (1) und/oder die zweite (2) Halteplatte so gestaltet ist, dass ein Teil wenigstens einer hohlen Faser durch die jeweilige der ersten (1) und der zweiten (2) Halteplatte hindurch freigelegt ist.

**10.** Mikrofluidsystem-Halteeinheit nach einem der Ansprüche 1 bis 9, bei der wenigstens eine hohle Faser eine Öffnung zum Aufnehmen eines Fluids von außen und/oder Abführen desselben nach außen aufweist.

**11.** Mikrofluidsystem-Halteeinheit nach Anspruch 10, bei der die Öffnung an der ersten und/oder der zweiten Halteplatte fixiert ist.

**12.** Mikrofluidsystem-Halteeinheit nach einem der Ansprüche 1 bis 11, die ferner eine Relaiseinheit zum Verbinden der hohlen Fasern miteinander umfasst.

**13.** Mikrofluidsystem-Halteeinheit nach einem der Ansprüche 1 bis 12, bei der eine Metallschicht (59) an einem bestimmten Bereich wenigstens einer hohlen Faser (58) ausgebildet ist.

**14.** Mikrofluidsystem-Halteeinheit nach einem der Ansprüche 1 bis 13, bei der ein bestimmter Bereich wenigstens einer hohlen Faser eine Lichtdurchlasseigenschaft aufweist.

**Revendications**

**1.** Unité de support d'un système microfluidique, comprenant une première plaque de support (1) et au moins un filament creux (501-508, 511-518) constituant un canal du système microfluidique et que l'on place sur la première plaque de support, où une région interne particulière (301-308, 311-318) du filament creux est configurée de manière à avoir une fonction sélectionnée du groupe constitué d'une adsorption-désorption, d'un échange ionique, d'une séparation, d'un enlèvement, d'une division, et d'une oxydoréduction, où un matériau de remplissage est fixé dans la région interne particulière d'au moins un filament creux pour procurer la fonction.

**2.** Unité de support d'un système microfluidique, comprenant une première plaque de support (1) et au moins un filament creux (501-508, 511-518) formant un canal du système microfluidique et que l'on place sur la première plaque de support, où une région interne particulière (301-308, 311-318) du filament creux est configurée de manière à avoir une fonction sélectionnée du groupe constitué d'une adsorption-désorption, d'un échange ionique, d'une séparation, d'un enlèvement, d'une division, et d'une oxydoréduction, où la région interne particulière d'au moins un filament creux est polymérisé par greffage pour procurer la fonction.

**3.** Unité de support d'un système microfluidique, comprenant une première plaque de support (1) et au moins un filament creux (501-508, 511-518) formant un canal du système microfluidique et que l'on place sur la première plaque de support, où une région interne particulière (301-308, 311-318) du filament creux est configurée de manière à avoir une fonction sélectionnée du groupe constitué d'une adsorption-désorption, d'un échange ionique, d'une séparation, d'un enlèvement, d'une division, et d'une oxydoréduction, où un matériau poreux est formé dans la région interne particulière d'au moins un filament creux pour procurer la fonction.

**4.** Unité de support d'un système microfluidique selon l'une quelconque des revendications 1 à 3, dans laquelle on place plus d'un filament creux (501-508, 511-518).

**5.** Unité de support d'un système microfluidique selon l'une quelconque des revendications 1 à 4, dans laquelle au moins un filament creux n'ayant aucune fonction dans la région interne particulière est en outre placé sur la première plaque de support (1).

**6.** Unité de support d'un système microfluidique selon l'une quelconque des revendications 1 à 5, dans laquelle au moins un filament creux (501-508) est placé en croix par rapport à au moins un autre filament creux (511-518).

**7.** Unité de support d'un système microfluidique selon l'une quelconque des revendications 1 à 6, dans laquelle au moins un filament creux est placé en croix par rapport au filament creux lui-même.

**8.** Unité de support d'un système microfluidique selon l'une quelconque des revendications 1 à 7, comprenant en plus une deuxième plaque de support (2), où au moins un filament creux (501-508, 511-518) est maintenu entre les première (1) et deuxième (2) plaques de support.

**9.** Unité de support d'un système microfluidique selon l'une quelconque des revendications 1 à 8, dans laquelle au moins l'une des première (1) et deuxième (2) plaques de support est configurée de sorte qu'une partie d'au moins un filament creux soit exposée à travers la plaque respective parmi les première (1) et deuxième (2) plaques de support.

**10.** Unité de support d'un système microfluidique selon l'une quelconque des revendications 1 à 9, dans laquelle au moins un filament creux a un orifice pour faire au moins l'un de recevoir un fluide de l'extérieur et l'évacuer vers l'extérieur.

**11.** Unité de support d'un système microfluidique selon la revendication 10, dans laquelle l'orifice est fixé à au moins l'une des première et deuxième plaques de support.

**12.** Unité de support d'un système microfluidique selon l'une quelconque des revendications 1 à 11, comprenant en plus une unité relais pour relier les filaments creux entre eux.

**13.** Unité de support d'un système microfluidique selon l'une quelconque des revendications 1 à 12, dans laquelle une couche métallique (59) est formée sur une région particulière d'au moins un filament creux (58).

**14.** Unité de support d'un système microfluidique selon l'une quelconque des revendications 1 à 13, dans laquelle une région particulière d'au moins un filament creux a une propriété de transmission de lumière.

Fig.1

(a)

(b)

Fig.2

(a)

(b)

Fig.3

**(a)**

**(b)**

Fig.4

Fig.5

Fig.6

**(a)**

**(b)**

Fig.7

**(a)**

501  502  503  504  · · ·

2
8b
8a
1

**(b)**

501

2
8b
501
8a
1

**(c)**

VIIb →

501 502 503 · · · 507 508

VIIa

VIIa

VIIb →

Fig.8

Fig.9

**EP 1 738 820 B1**

## REFERENCES CITED IN THE DESCRIPTION

### Patent documents cited in the description

- EP 1486455 A
- FR 2813073 A
- DE 43208697 A
- US 4959152 A
- US 5070606 A
- WO 03070623 A

### Non-patent literature cited in the description

- **Shoji.** *Chemical Industry,* April 2001, vol. 52 (4), 45-55
- **Maeda.** *Journal of Japan Institute of Electronics Packaging,* January 2002, vol. 5 (1), 25-26
- **Inaga.** 50th National Congress for Environmental Studies. *Science Council of Japan,* 1999, vol. 14, 25-32